# EUROPÄISCHE PATENTSCHRIFT

(11) **EP 3 210 003 B1**
(45) Veröffentlichungstag und Bekanntmachung des Hinweises auf die Patenterteilung: **03.10.2018**
(21) Anmeldenummer: 15801996.8
(22) Anmeldetag: 20.10.2015
(51) Int. Cl.: G01N 21/59, G01N 21/84, G01N 21/896

(54) **VERFAHREN UND VORRICHTUNG ZUR ERMITTLUNG DES TRANSMISSIONSGRADS EINES FLACHGLAS-SUBSTRATS**
METHOD AND DEVICE FOR DETERMINING THE TRANSMITTANCE OF A SHEET GLASS SUBSTRATE
PROCÉDÉ ET DISPOSITIF POUR DÉTERMINER LA TRANSMITTANCE D'UN SUBSTRAT DE VERRE PLAT

(30) Priorität: 21.10.2014 DE 102014115317
(43) Veröffentlichungstag der Anmeldung: 30.08.2017
(73) Patentinhaber: Cibite AG, 86609 Donauwörth (DE)
(72) Erfinder: OLSCHEWSKI, Dieter, 86609 Donauwörth (DE); DÖHRING, Ina, 86156 Augsburg (DE); LÜKE, Peter, 86687 Kaisheim (DE)
(74) Vertreter: Patentanwälte Bauer Vorberg Kayser
(86) Internationale Anmeldenummer: PCT/EP2015/074249
(87) Internationale Veröffentlichungsnummer: WO 2016/062711

(56) Entgegenhaltungen:
- EP-A1- 2 472 251
- EP-A2- 2 615 446
- CN-A- 102 944 563
- JP-A- H08 327 561
- JP-A- 2006 266 933

## Beschreibung

Die Erfindung betrifft ein Verfahren und eine Vorrichtung zur Ermittlung des Transmissionsgrads eines Flachglas-Substrats mit einer Messvorrichtung, mit der Licht wenigstens einer Lichtquelle von einer Seite des Flachglas-Substrats durch das Flachglas-Substrat hindurch auf die gegenüber liegende Seite des Flachglas-Substrats geleitet wird, wo es durch wenigstens eine Empfängereinheit erfasst wird. Anhand eines Vergleichs zwischen der Intensität des von der Lichtquelle ausgesandten Lichts und des auf die Empfängereinheit fallenden Lichts kann dann der Transmissionsgrad des Flachglas-Substrats ermittelt werden.

Bei der Herstellung von Flachglas ist ein kontinuierlicher Transmissionsgrad als eine von verschiedenen Qualitätsanforderungen zu erfüllen. Ein weiterer wesentlicher Parameter ist beispielsweise die Dicke des Glases. Ein kontinuierlicher Transmissionsgrad ist insbesondere bei der Verwendung von Flachglas als Solarglas zu beachten, bei dem es sich um ein spezielles Glas für thermische Solarkollektoren und die Photovoltaik handelt. Um die auftreffende Sonnenstrahlung optimal nutzen können, muss ein möglichst hoher Transmissionsgrad der aufliegenden Glasschicht gewährleistet werden.

Für den Einsatz als Solarglas vorgesehenes Flachglas stellt dabei besonders hohe Anforderungen an eine durchgängige Homogenität. Bei Flachglas selbst wird zwischen Floatglas und Walzglas unterschieden, wobei die Art des Glases vom jeweils gewählten Produktionsprozess abhängt. Beide Glassorten werden als Solarglas verwendet, wobei planes Glas im Floatprozess und strukturiertes Glas (Strukturglas) im Walzprozess hergestellt werden kann. Beide Produktionsprozesse sind typischerweise endlose kontinuierliche Verfahren, bei denen die Glasschmelze ständig flach auf ein Zinnbad gezogen bzw. durch rotierende Walzen gewalzt wird. Erst nach Durchlaufen einer Kühlung wird das Glas zugeschnitten.

Der Prozess der Herstellung von Solarglas erfordert über die gesamte Produktionsbreite einen gesicherten, konstanten Transmissionsgrad. Abweichungen hiervon führen unmittelbar zu Qualitätsproblemen bei der Weiterverarbeitung der Glasplatten zu Solarmodulen. Bei dem oftmals für die Herstellung von Solarmodulen verwendetem Strukturglas handelt es sich um Gussglas, bei dem die Struktur durch rotierende Walzen aufgeprägt wird. Bereits die Temperatur dieser Walzen und deren Laufgenauigkeit beeinflussen die Glasdicke und den Transmissionsgrad. Daneben sind Einflussgrößen wie die Inhomogenität des Glasgemisches oder Verunreinigungen relevant, die zu anderen Strukturen führen können.
Da beispielsweise bei der Herstellung von Photovoltaikmodulen die Solarzellen und die Glasabdeckung irreversibel miteinander verbunden werden, bewirkt eine schlechte Glasqualität zusätzlich einen Ausschuss an teuren photovoltaischen Zellen. Ein nicht ausreichender Transmissionsgrad kann nämlich derzeit erst bei der Ausgangsprüfung des Endproduktes Solarglas oder häufig erst im Solarmodul selbst festgestellt werden. Daher sind die Ausschusskosten hierbei besonders hoch. Das beschichtete Glas stellt dann Sondermüll dar und die Ausschussquote liegt erfahrungsgemäß im hohen einstelligen Prozentbereich. Diese hohen betriebs- sowie volkswirtschaftlichen Schäden und die gleichzeitige Ressourcenvernichtung (u.a. Silizium in der Glas- und Solarzellenproduktion) ist nur durch eine möglichst frühe Fehlererkennung in der Glasproduktion reduzierbar.
Zur Überprüfung des Transmissionsgrads wurden bereits Messverfahren entwickelt, mit denen sich die zu überwachenden Parameter stichprobenartig überprüfen lassen. Hierbei werden üblicherweise Spektralphotometer eingesetzt, bei denen die Wellenlänge des einfallenden Lichtstrahls variiert und der durchgelassene Anteil in Abhängigkeit von der Wellenlänge registriert wird. Gegebenenfalls wird hierbei auch die Winkelabhängigkeit der Einstrahlung des Lichts berücksichtigt. Derartige Messungen sind jedoch sehr aufwendig und werden üblicherweise nur unter Laborbedingungen durchgeführt und sind für den Einsatz im Produktionsprozess nicht geeignet. Ferner handelt es sich üblicherweise um Punktmessungen, mit denen sich nicht die gesamte Fläche eines Flachglas-Substrats überprüfen lässt.

CN 102 944 563 A, JP H08 327561 A und JP 2006266933 A beschreiben die Überprüfung von Flachglas-Substraten, wobei das Flachglas-Substrat mit Licht einer flächenhaften diffusen Lichtquelle bestrahlt und das durch das Substrat transmittierte Licht mit einem ortsauflösendem Empfänger detektiert wird. Es wird jedoch keine Bestimmung des Transmissionsgrads beschrieben. EP 2 615 446 A und EP 2 472 251 A beschreiben die Ermittlung des Transmissionsgrads von Flachglas-Substraten, wobei das Substrat mit kollimiertem Licht bestrahlt und das durch das Substrat transmittierte Licht mit einem nicht ortsauflösenden Empfänger detektiert wird.

Speziell im Bereich des Solarglases ist der Einfluss des Einfallswinkels von Licht erheblich, da bei kleinerem Winkel größere Anteile des Lichts reflektiert werden und die Absorption durch die längeren Durchdringungswege zunimmt. Der Einfallswinkel ändert sich jedoch naturgegeben im Tages- und Jahresablauf. Die Hersteller von Solarglas unternehmen daher erhöhte Anstrengungen, die Effektivität der Solarzellen auch für flache Einfallswinkel durch Maßnahmen wie Antireflexionsbeschichtungen und strukturierte Oberflächen zu erhöhen. Die erforderliche Messgenauigkeit von für die Überprüfung des Transmissionsgrads verwendeten Messverfahren wird dieser Entwicklung jedoch bisher nicht gerecht. Insbesondere der Transmissionsgrad von Strukturglas mit in die Oberfläche eingebrachten Strukturen ist mit den bekannten Messverfahren nicht verlässlich prüfbar.
Aufgabe der Erfindung ist es daher, ein Verfahren und eine Vorrichtung zur Überprüfung des Transmissionsgrads eines Flachglas-Substrats bereitzustellen, mit dem/der eine in den Produktionsprozess integrierbare, flächendeckende Transmissionsmessung durchführbar ist. Insbesondere sollen sich das Verfahren und die Vorrichtung dabei zur Überprüfung des Transmissionsgrads von Strukturglas eignen. Erfindungsgemäß wird diese Aufgabe durch ein Verfahren gemäß dem unabhängigen Anspruch 1 gelöst. Vorteilhafte Weiterbildungen dieses Verfahrens ergeben sich aus den Unteransprüchen 2-10. Ferner wird die Aufgabe durch eine Vorrichtung gemäß dem unabhängigen Anspruch 11 gelöst. Vorteilhafte Weiterbildungen der Vorrichtung ergeben sich aus den Ansprüchen 12-15.

Das erfindungsgemäße Verfahren gemäß Anspruch 1 eignet sich zur Ermittlung des Transmissionsgrads eines Flachglas-Substrats mit einer Messvorrichtung, mit der Licht wenigstens einer Lichtquelle von einer Seite des Flachglas-Substrats durch das Flachglas-Substrat hindurch auf die gegenüber liegende Seite des Flachglas-Substrats geleitet wird, wo es durch wenigstens eine Empfängereinheit erfasst wird. Anhand eines Vergleichs zwischen der Intensität des von der Lichtquelle ausgesandten Lichts und des auf die Empfängereinheit fallenden Lichts wird der Transmissionsgrad des Flachglas-Substrats ermittelt. Erfindungsgemäß handelt es sich bei der verwendeten Lichtquelle um eine flächenhafte diffuse Lichtquelle und die Empfängereinheit umfasst wenigstens einen ortsauflösenden Empfänger, zwischen denen das Flachglas-Substrat positioniert wird. Durch eine Auswertung von Helligkeitswerten im Messbild des ortsauflösenden Empfängers wird der Transmissionsgrad ortsaufgelöst in einer Teilfläche des Flachglas-Substrats ermittelt, welche vom Messbild abgedeckt wird.

Mit der flächenhaften diffusen Lichtquelle kann so eine Fläche des Flachglas-Substrats homogen durchleuchtet werden, und mittels eines oder mehrerer ortsauflösender Empfänger ist es möglich, anhand dieses Lichts auch den Transmissionsgrad ortsaufgelöst innerhalb der Teilfläche des Flachglas-Substrats zu ermitteln, die von dem Messbild des jeweiligen Empfängers abgedeckt wird.

Als ortsauflösender Empfänger wird vorzugsweise eine Kamera verwendet. Hierbei kann es sich beispielsweise um eine Kamera mit einem CCD- oder CMOS-Chip handeln. Mit dieser Kamera lässt sich ein Messbild erstellen, das beispielsweise eine Teilfläche in der Größenordnung von 5 x 10 cm oder 10 x 20 cm auf dem Flachglas-Substrat abgedeckt.

Um die Genauigkeit bei der Ermittlung des Transmissionsgrads zu erhöhen, ist vorzugsweise vorgesehen, dass im Messbild des ortsauflösenden Empfängers eine Bildbearbeitung durchgeführt wird. Die Ermittlung des Transmissionsgrads erfolgt dann anhand der Helligkeitswerte nach der Bildbearbeitung des Messbilds. Die Bildbearbeitung kann dabei insbesondere für Messpunkte im Bild eine Mittelwertbildung für Helligkeitswerte über mehrere Punkte wenigstens eines Ausschnitts des Messbilds beinhalten. Durch die erfindungsgemäße Verwendung einer flächenhaften diffusen Lichtquelle kommt es zu einer Überlagerung einer Vielzahl von Punktquellen, und damit zu einem eher statistischen Messwert, der durch die Überlagerung der verschiedenen Punktquellen und Durchgänge durch das Glas entsteht. Für die Erfindung wird davon ausgegangen, dass dieser Messwert im Mittel überall gleich sein sollte.

Die für die Mittelwertbildung verwendeten Ausschnitte innerhalb des Messbildes sollten vorzugsweise ausreichend groß gewählt sein, damit mögliche Ablenkungen des Lichts beim Durchtritt durch das Flachglas-Substrats innerhalb eines Ausschnitts erfasst und in die Mittelwertbildung einbezogen werden können. Bei der Verwendung des Verfahrens zur Überprüfung von Strukturglas ist ein für die Mittelwertbildung verwendeter Ausschnitt des Messbilds daher vorteilhafterweise größer als Abmessungen von Strukturen in der Oberfläche des Flachglas-Substrats. Werden beispielsweise pyramidenartige Strukturen in die Oberfläche eingebracht, sollten die Ausschnitte für die Mittelwertbildung größer als die Ausdehnung der Einzelstrukturen sein. Durch eine geeignete Bildbearbeitung können so Ablenkungen des Lichts durch die Strukturen berücksichtigt werden. Die Erfindung ermöglicht es so insbesondere, auch den Transmissionsgrad von Strukturglas mit einer hinreichenden Genauigkeit zu ermitteln.

Das Verfahren ist dabei universell einsetzbar für alle Flachglasherstellungsverfahren, Flachglastypen und Flachglasanwendungen. Insbesondere eignet es sich zur Überprüfung des Transmissionsgrads von Strukturglas. Der ermittelte Transmissionsgrad von Floatglas sollte insbesondere für die Solarglas-Produktion bei ≥ 90% liegen. Durch Oberflächenstrukturierung und Beschichtung erreicht man eine Verbesserung um jeweils bis zu 3%. Da die Angaben i.d.R. auf 0,1% genau erfolgen, sollte die angestrebte Messgenauigkeit ≤ 0,1% sein.

Der Fokus der Erfindung liegt dabei insbesondere auf einer Messung zur Qualitätssicherung, d.h. das System zielt in erster Linie darauf ab, eine gleichbleibende Qualität zu sichern. Ursachen für eine verminderte Transmission können verschiedene Faktoren sein, wozu beispielsweise Blasen im Glas oder eine erhöhte Absorption im Glas selbst gehören. Erhöhte Absorption kann verursacht sein durch Verunreinigungen im Glas. Typisch sind hier eisenhaltige Beimischungen, aber es gibt auch andere mineralische Verunreinigungen, welche die Absorption im Glas erhöhen können. Die Dicke des Glases hat ebenfalls einen Einfluss auf den Transmissionsgrad, dieser Einfluss ist jedoch verhältnismäßig gering.

Für die Qualitätssicherung werden Verunreinigungen im Glas lokalisiert, welche aufgrund von Absorption eine Reduzierung des Transmissionsgrads bewirken. Auf der Grundlage bekannter Transmissionsspektren von Glas kann dieses Ziel beispielsweise durch die Messung des Transmissionsgrads für einzelne ausgewählte Wellenlängen erreicht werden, die durch eine flächenhafte diffuse Lichtquelle mit monochromatischen bzw. schmalbandigen Lichtquellen realisiert werden. Als Wellenlängen werden vorzugsweise diejenigen gewählt, welche von potentiellen Verunreinigungen im Glas selektiv absorbiert werden. Die Empfängereinheit wird dann auf die gewählten Wellenlängen abgestimmt. Alternativ oder ergänzend zu Messungen mit monochromatischem Licht verschiedener Wellenlängen kann auch eine Messung mit Weißlicht durchgeführt werden.

Dabei kann eine Bestimmung eines Absolutwerts für den Transmissionsgrad durchgeführt werden. Für eine Qualitätssicherung kann es jedoch auch ausreichend sein, lediglich die Abweichung der Transmission von einem Sollwert zu bestimmen und so den Transmissionsgrad zu überprüfen. In einer Ausführungsform der Erfindung erfolgt somit eine Überprüfung des Transmissionsgrads durch einen Vergleich eines durch die Messvorrichtung ermittelten Transmissionsgrads mit einem Soll-Transmissionsgrad. Im Wesentlichen wird dann ein Soll-Ist-Vergleich des Transmissionsgrads vorgenommen.

Das Verfahren kann mit einer stationären Messvorrichtung durchgeführt werden, in welche ein Flachglas-Substrat temporär eingebracht wird. Bei entsprechender Ausdehnung der Lichtquelle und einer Empfängereinheit beispielsweise mit einer Vielzahl von Empfängern kann so der Transmissionsgrad innerhalb eines größeren Bereichs eines Flachglas-Substrats überprüft werden. In einer bevorzugten Ausführungsform der Erfindung werden das Flachglas-Substrat und die Messvorrichtung jedoch kontinuierlich so in Relation zueinander bewegt, dass die Empfängereinheit im Laufe dieser Bewegung den Lichtdurchtritt durch unterschiedliche Teilbereiche des Flachglas-Substrats erfasst. Auf diese Weise kann ein Flachglas-Substrat vollständig geprüft werden, wenn eine beweglich ausgeführte Messvorrichtung beispielsweise die gesamte Fläche eines Substrats abscannt. Um bewegliche Komponenten einer Messvorrichtung zu vermeiden, hat es sich jedoch als vorteilhaft erwiesen, wenn diese im Wesentlichen stationär ist und das Flachglas-Substrat gegenüber der Messvorrichtung bewegt wird, um so ebenfalls die gesamte Fläche eines Substrats zu scannen.

Um das Verfahren vorteilhaft in den Produktionsprozess der Flachglasherstellung zu integrieren, ist in einer Ausführungsform der Erfindung insbesondere vorgesehen, dass die Messvorrichtung ortsfest ist, während das Flachglas-Substrat kontinuierlich zwischen der Lichtquelle und der Empfängereinheit hindurch bewegt wird. Die Messvorrichtung kann dabei als eine Art Portal ausgeführt sein, durch welches eine kontinuierlich erzeugte Glasbahn fortlaufend zwischen der Lichtquelle und der Empfängereinheit geführt wird.

Vorzugsweise hat das Flachglas-Substrat quer zur Richtung der Relativbewegung zwischen der Messvorrichtung und dem Flachglas-Substrat eine Ausdehnung der Breite B, wobei die Lichtquelle das Flachglas-Substrat über die gesamte Breite B durchstrahlt. Eine entsprechend ausgebildete Empfängereinheit kann dann Licht erfassen, welches durch einen Streifen durch das Flachglas-Substrat hindurchtritt, der sich über die gesamte Breite B des Flachglas-Substrats erstreckt. So kann eine Art Linien-Scan durchgeführt werden, wodurch bei einem fortlaufend durch die Messvorrichtung bewegten Flachglas-Substrat kontinuierlich eine vollflächige Überprüfung einer Glasbahn erfolgen kann.

Insbesondere weist die Empfängereinheit hierzu mehrere Empfänger (Kameras) auf, die zur Erfassung von Licht der Lichtquelle ausgebildet sind und deren Messbilder durch eine Bildverarbeitungseinheit zu einem Abbild eines flächigen Bereiches des Flachglas-Substrats zusammen gefügt werden. So kann eine größere Teilfläche des Flachglas-Substrats überprüft werden. Für einen Linien-Scan sind die Empfänger der Empfängereinheit beispielsweise nebeneinander angeordnet und ihre Messbilder werden zu einem Abbild eines Streifens des Flachglas-Substrats zusammen gefügt, der sich über die gesamte Breite B erstreckt.

In jedem Fall ist es dabei vorteilhaft, wenn sich die Messbilder der Empfänger dabei bereichsweise überlappen. Hierdurch lässt sich die Genauigkeit der Ermittlung des Transmissionsgrads erhöhen, wenn beispielsweise Helligkeitswerte ein und desselben Punktes in zwei überlappenden Bildern miteinander verglichen und so möglichst verifiziert werden. Bei abweichenden Helligkeitswerten für einen Punkt kann ebenfalls eine Mittelwertbildung durchgeführt werden. Die überlappenden Messbilder können ferner für eine Selbstkalibrierung des Messsystems mit mehreren Empfängern verwendet werden.

Insgesamt ermöglicht es die Erfindung, eine Transmissionsmessung flächendeckend innerhalb eines kontinuierlichen Herstellungsprozesses für Flachglas durchzuführen und nicht als Einzelmessung an der geschnittenen Ware. Die Einzelmessung an geschnittener Ware ist jedoch nicht ausgeschlossen, sondern auch für diese Ausführungsform bringt die Erfindung die genannten Vorteile in Bezug auf eine flächendeckende Überprüfung des Transmissionsgrads mit sich.

Insbesondere ist es auch möglich, die Transmission direkt im Produktionsprozess zu messen und damit unmittelbar in den laufenden Herstellungsprozess einzugreifen. Das Verfahren ermöglicht so die Einhaltung der hohen Anforderungen an beispielsweise Solarglas bereits in der Produktion. Durch eine kontinuierliche Transmissionsmessung wird die Ausschussquote bei beschichtetem Glas, sowie in der Folge bei Photovoltaik- und Kollektormodulen, nachhaltig reduziert. Ein wichtiger ökologischer und ökonomischer Vorteil ist es somit, dass der Ausschuss in der Produktion und in der Weiterverarbeitung (Beschichtung oder beim Erstellen von Verbundglas) deutlich reduziert werden kann. Daraus resultiert eine erhebliche Einsparung bei den Ausschusskosten und Entsorgungskosten.

Dabei ist ein Einsatz unter Produktionsbedingungen möglich, was insbesondere hohe Temperaturen und Fremdlicht (z.B. Beleuchtung, Flurförderfahrzeuge) beinhaltet. Durch die Verwendung von moduliertem Licht können Fremdlichteinflüsse beispielsweise eliminiert werden.

In einer Ausführungsform der Erfindung ist ferner vorgesehen, dass Licht der Lichtquelle in wenigstens einem Bereich neben dem Flachglas-Substrat ohne Durchtritt durch das Flachglas-Substrat von der Empfängereinheit erfasst wird. Dazu kann die Lichtquelle breiter ausgeführt sein als das zu prüfende Flachglas-Substrat, so dass auch Bereiche beispielsweise links und rechts einer Glasbahn beleuchtet werden. Die Empfängereinheit ist dann so ausgebildet, dass sie auch dieses Licht erfassen kann. Hierdurch kann im Randbereich des Flachglas-Substrats eine Nullmessung ohne Medium durchgeführt werden, was einer Transmission von 100% entspricht. Diese Nullmessung gibt Veränderungen in den äußeren Gegebenheiten wieder, die beim fortlaufenden Betrieb der Messvorrichtung entstehen können und die bei einer Kalibrierung berücksichtigt werden müssen. Das von der Empfängereinheit ohne Durchtritt durch das Flachglas-Substrat erfasste Licht der Lichtquelle kann daher insbesondere als Referenzwert für die Kalibrierung der Messvorrichtung verwendet werden.

Vorzugsweise erfolgt die Kalibrierung in Form einer Selbstkalibrierung des Systems. In einer Ausführungsform der Erfindung kann dies auch kontinuierlich während der Überprüfung des Transmissionsgrads erfolgen, da die Nullmessung neben dem Substrat fortlaufend durchgeführt werden kann. So muss der Produktionsprozess einer Glasbahn nicht unterbrochen werden, sondern das System kalibriert sich fortlaufend selbstständig. Dazu kann beispielsweise das Messbild wenigstens eines äußeren Empfängers verwendet werden, welches einen Randbereich des Flachglas-Substrats wiedergibt, aber gleichzeitig auch einen Bereich neben dem Flachglas-Substrat abdeckt, in dem Licht von der Lichtquelle ohne Glasdurchtritt auf den Empfänger trifft. Diesem äußeren Empfänger steht somit aus einer Nullmessung ein Referenzwert mit einem definierten Kalibrierwert für eine Transmission von 100% zur Verfügung, mit dem dieser Empfänger kalibriert werden kann. Das Gleiche gilt für einen zweiten, gegenüber liegenden äußeren Empfänger am anderen Rand der Glasbahn, der so ebenfalls kalibriert werden kann. Ausgehend von diesen beiden äußeren Empfängern kann das Messsystem von weiter innen liegenden Empfängern dann in einem Step-by-Step-Abgleich mit dem jeweils benachbarten Messsystem kalibriert werden. Für diesen Abgleich ist die bereits erwähnte Überlappung der Messbilder der einzelnen Empfänger von Vorteil. So verfügt jeder Empfänger für einen Überlappungsbereich ergänzend zu den eigenen Daten auch über Daten von wenigstens einer benachbarten Kamera, welche für einen Abgleich und eine Kalibrierung verwendet werden können. In jeden Abgleich kann so Schritt für Schritt der Referenzwert einfließen, der durch eine der beiden äußeren Empfänger bei einer Nullmessung ermittelt wurde. Auf diese Weise kann eine geeignete Selbstkalibrierung des Systems realisiert werden, was die Messeinrichtung insbesondere für den Einsatz direkt im Produktionsprozess mit schwankenden und extremen Umgebungseinflüssen einsetzbar macht.

Von der Erfindung umfasst ist auch eine zugehörige Vorrichtung zur Ermittlung des Transmissionsgrads eines Flachglas-Substrats, umfassend eine Messvorrichtung, mit der Licht wenigstens einer Lichtquelle von einer Seite des Flachglas-Substrats durch das Flachglas-Substrat hindurch auf die gegenüber liegende Seite des Flachglas-Substrats geleitet werden kann, wo es durch wenigstens eine Empfängereinheit erfasst wird. Die Vorrichtung weist eine Datenverarbeitungseinheit in Verbindung mit der Lichtquelle und der Empfängereinheit auf, welche dazu ausgebildet ist, anhand eines Vergleichs zwischen der Intensität des von der Lichtquelle ausgesandten Lichts und des auf die Empfängereinheit fallenden Lichts den Transmissionsgrad des Flachglas-Substrats zu ermitteln. Dabei ist die Lichtquelle eine flächenhafte diffuse Lichtquelle und die Empfängereinheit umfasst wenigstens einen ortsauflösenden Empfänger, zwischen denen das Flachglas-Substrat positionierbar ist. Die Datenverarbeitungseinheit ist ferner dazu ausgebildet, durch eine Auswertung von Helligkeitswerten im Messbild des ortsauflösenden Empfängers den Transmissionsgrad ortsaufgelöst in einer Teilfläche des Flachglas-Substrats zu ermitteln, welche vom Messbild abgedeckt wird.

Vorzugsweise weist die Vorrichtung Mittel zur kontinuierlichen Bewegung des Flachglas-Substrats und der Messvorrichtung in Relation zueinander auf, wobei mit der Empfängereinheit im Laufe dieser Bewegung der Lichtdurchtritt durch unterschiedliche Teilbereiche des Flachglas-Substrats erfassbar ist. Somit ist die Vorrichtung dazu ausgebildet, den Transmissionsgrad innerhalb einer größeren Fläche des Flachglas-Substrats zu prüfen. Beispielsweise kann die Messvorrichtung dabei ortsfest sein, während das Flachglas-Substrat kontinuierlich zwischen der Lichtquelle und der Empfängereinheit hindurch bewegt wird. Wie zuvor bereits erläutert, kann die Messeinrichtung so insbesondere in einen Produktionsprozess integriert sein, wobei eine kontinuierlich hergestellte Glasbahn in einem Endlosband durch die Messeinrichtung hindurch läuft.

Die Abmessungen der Vorrichtung sind dabei vorzugsweise so gewählt, dass das Flachglas-Substrat quer zur Richtung der Relativbewegung zwischen der Messvorrichtung und dem Flachglas-Substrat eine Ausdehnung der Breite B hat, die geringer ist als die Breite b der Lichtquelle in derselben Richtung. Typische Breiten für Flachglas-Substrate liegen in der Größenordnung von etwa 3,5 bis 4 m und die Lichtquelle kann diese beispielsweise auf zwei gegenüber liegenden Seiten um jeweils 10 cm überragen.

Um einen Linienscan durchzuführen, weist die Empfängereinheit vorzugsweise mehrere nebeneinander angeordnete ortsauflösende Empfänger wie Kameras auf. Die Datenverarbeitungseinheit ist dann zur Zusammenfügung der Messbilder der Empfänger zu einem größeren Abbild eines flächigen Bereiches des Flachglas-Substrats ausgebildet. Ferner ist die Datenverarbeitungseinheit für die zuvor erwähnte Kalibrierung der Messvorrichtung anhand von der Empfängereinheit ohne Durchtritt durch das Flachglas-Substrat erfassten Lichts der Lichtquelle in einem Bereich neben dem Flachglas-Substrat ausgebildet. Die Vorrichtung und insbesondere die Datenverarbeitungseinheit sind somit insgesamt zur Durchführung einer oder mehrerer Ausführungsformen des erfindungsgemäßen Verfahrens ausgebildet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung der Komponenten eines Systems mit einer Messvorrichtung zur Durchführung des erfindungsgemäßen Verfahrens; und
- Fig. 2: einen schematischen Querschnitt durch eine Lichtquelle, ein Flachglas-Substrat und eine Empfängereinheit.

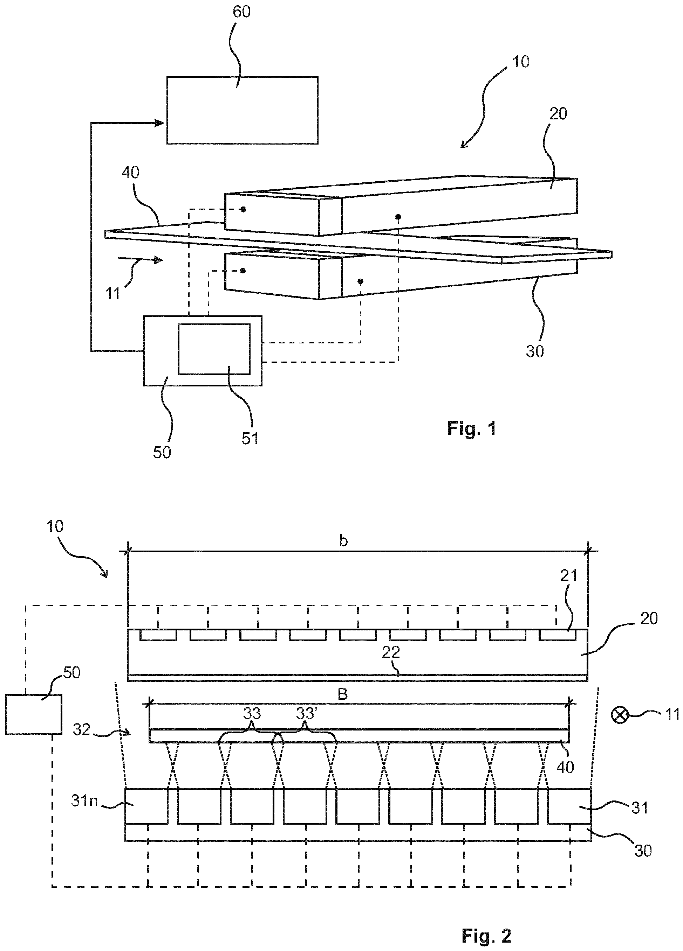

Die Erfindung verwendet das Prinzip der quantitativen Messung des Transmissionsgrads als Verhältnis der Intensität eines Lichtstrahls nach dem Durchgang durch das zu vermessende Medium zu der des auftreffenden Lichtstrahls. Hierfür ist es notwendig, in einer Messvorrichtung die Intensität vor und nach Hindernisdurchgang zu kennen bzw. zu messen. Die wesentlichen Komponenten eines Ausführungsbeispiels eines Systems mit einer solchen Messvorrichtung werden im Folgenden anhand der schematischen Darstellungen der Figuren 1 und 2 erläutert.

Die Messvorrichtung 10 des Ausführungsbeispiels der Fig. 1 umfasst dabei eine flächenhafte diffuse Lichtquelle 20. Diese kann beispielsweise durch ein LED-Panel mit einer Vielzahl von Leuchtdioden 21 unter einem lichtdurchlässigen, plattenförmigen Diffusor 22 gebildet werden (siehe auch Fig. 2). Der Diffusor 22 kann beispielsweise als Folie ausgeführt sein. Ein solches Panel besteht im Wesentlichen aus einer Leiterplatte, auf der in einem zweidimensionalen Array Leuchtdioden (LEDs) beispielsweise vom SMD-Typ montiert sind. Bei den LEDs handelt es sich insbesondere um Weißlichtdioden. Eine Weißlicht-LED kann beispielsweise durch eine blaue LED mit einer Konversationsschicht realisiert werden, die auf Phosphoreszenz beruht. Diese Weißlichtdioden können ergänzt werden durch LEDs, die monochromatisches Licht unterschiedlicher Wellenlängen erzeugen. So können auf dem gleichen Panel beispielsweise gelbe, grüne, rote und/oder blaue LEDs angebracht sein. Die Auswahl der Wellenlängen der LEDs hängt dabei insbesondere davon ab, welcher Spektralbereich zum Nachweis einer potentiellen Verunreinigung für relevant gehalten wird.

Die LEDs sind innerhalb einer solchen als Lichtmatrix bzw. Leuchtmatrix ausgebildeten Leuchtwand 20 beispielsweise in gleichmäßigen Reihen angeordnet. Die Leuchtdioden können jedoch auch versetzt zueinander oder in anderen speziellen Mustern angeordnet sein. Insbesondere hat sich eine Anordnung in hexagonalen Gittern als zweckmäßig erwiesen. Der Abstand zwischen den einzelnen LEDs kann zweckmäßigerweise in der Größenordnung von 1 bis 4 cm, insbesondere bei etwa 2 cm liegen. Beispielsweise kann ein LED-Panel dabei etwa 1000 LEDs umfassen. Vorzugsweise ist jede LED einzeln ansteuerbar, oder Gruppen von LEDs sind getrennt voneinander ansteuerbar. Die Intensität der Lichtquelle 20 ist vorzugsweise flexibel einstellbar, was beispielsweise über eine hardware-basierte Stromreglung der LEDs erfolgen kann. Vorteilhafterweise wird jedoch eine software-basierte Pulsweitenmodulation eingesetzt (PWM-Regelung).

Durch die mögliche Einzelansteuerung der LEDs können ferner sowohl zeitlich variierende Muster als auch - entsprechend der Bestückung mit unterschiedlichen LEDs - Licht mit unterschiedlichen diskreten Spektren erzeugt werden. Dabei kann eine Auswahl der für den spezifischen Messzweck am besten geeigneten LEDs erfolgen.

Die so ausgebildete flächenhafte Lichtquelle 20 ist beispielsweise oberhalb eines Flachglas-Substrats 40 angeordnet, so dass das Glas von oben homogen beleuchtet wird. Unterhalb des Flachglas-Substrats 40 befindet sich als weiterer Teil der Messvorrichtung 10 eine Empfängereinheit 30, die wenigstens einen ortsauflösenden Empfänger in Form beispielsweise einer Kamera umfasst. Die Anordnung der flächenhaften diffusen Lichtquelle 20 und der Empfängereinheit 30 kann jedoch auch umgekehrt sein, so dass die Lichtquelle 20 unterhalb und die Empfängereinheit 30 oberhalb des zu prüfenden Glases angeordnet sind.

Vorzugsweise sind mehrere Kameras 31,..., 31n nebeneinander angeordnet, wie es auch dem Querschnitt der Fig. 2 zu entnehmen ist. Die Glasbahn 40 hat dabei quer zu ihrer Bewegungsrichtung 11 eine Ausdehnung der Breite B. Durch eine Empfängereinheit 30 mit mehreren nebeneinander angeordneten Kameras 31, ..., 31n kann aus den Bildern dieser Kameras ein streifenförmiges Abbild des durchlaufenden Flachglas-Substrats 40 über seine gesamte Breite B erstellt werden. Die Empfängereinheit 30 ist somit so breit bzw. weist so viele nebeneinander angeordnete Empfänger auf, dass die Glasbahn 40 in ihrer gesamten Breite B erfassbar ist. Die Lichtquelle 20 ist entsprechend ebenfalls so ausgestaltet, dass sie die gesamte Breite B des Flachglas-Substrats 40 gleichmäßig durchstrahlen kann. So kann ein Linienscan der Glasbahn 40 über ihre gesamte Breite B erzeugt werden, indem der Transmissionsgrad in einem Streifen geprüft wird, der sich über die gesamte Breite des Flachglas-Substrats erstreckt. Vorzugsweise überlappen sich dabei die Messbilder in der Ebene der Glasbahn, welche durch jeweils eine Kamera erfassbar sind. Fig. 2 zeigt exemplarisch zwei überlappende Bereiche/Messbilder 33 und 33' von zwei nebeneinander liegenden Kameras.

Bei dem Flachglas-Substrat 40 handelt es sich beispielsweise um eine Glasbahn, die sich in Richtung des Pfeils 11 durch die Messvorrichtung 10 hindurch bewegt. Die Messvorrichtung 10 mit der Lichtquelle 20 und der Empfängereinheit 30 ist somit in diesem Ausführungsbeispiel stationär, während sich die zu überprüfende Glasbahn 40 in Relation zur Messvorrichtung 10 bewegt. Das Glas ist dabei noch nicht in Glasplatten geschnitten, sondern es handelt sich um eine kontinuierlich erzeugte und durch die Messvorrichtung 10 laufende Endlosbahn, wie sie typischerweise in Floatglas- oder Strukturglasanlagen erzeugt wird. Die Erfindung kann jedoch auch bei bereits zugeschnittenen Glasscheiben eingesetzt werden.

Die Messvorrichtung 10 kann dabei auch beweglich ausgeführt sein und beispielsweise über verschiedene Bereiche eines Flachglas-Substrats bewegt werden, welche dann stationär ist oder gleichzeitig ebenfalls bewegt wird. Die Messvorrichtung 10 kann sowohl in der stationären als auch in der beweglichen Variante in Form eines Portals mit einer Ober- und einer Unterseite ausgeführt sein, zwischen denen das zu prüfende Flachglas-Substrat positioniert werden kann.

Die Lichtquelle 20 wird gepulst betrieben, wobei die Kameras der Empfängereinheit 30 mit diesem quasi stroboskopischen Betrieb synchronisiert sind. Die Blitzrate der Lichtquelle 20 liegt dabei beispielsweise im Bereich einiger 10 bis 100 Hertz und die Blitzdauer im Bereich von Mikrosekunden. Typischerweise sind die Verschlusszeiten der Kameras länger als die Blitzdauer der Lichtquelle. Wenigstens für diese Synchronisierung, den Vergleich von ausgesandter zur empfangener Lichtintensität und für die Ermittlung des Transmissionsgrads stehen die Lichtquelle 20 und die Empfängereinheit 30 in Verbindung mit einer Datenverarbeitungseinheit 50. Die Datenverarbeitungseinheit 50 ist insbesondere dazu ausgebildet, anhand der Intensität des Lichts der Lichtquelle 20 und Helligkeitswerten für das von den ortsauflösenden Empfängern 31, ..., 31n empfangenen Lichts den Transmissionsgrad einer Teilfläche der Glasbahn ortsaufgelöst zu ermitteln und vorzugsweise auch anhand eines Sollwerts zu überprüfen bzw. zu bewerten.

Die Datenverarbeitungseinheit 50 umfasst ferner eine Bildverarbeitungseinheit 51, welche vorzugsweise aus den Bildern der Kameras ein Abbild einer erfassten Teilfläche des Flachglas-Substrats erstellen kann. Die Bildverarbeitungseinheit 51 umfasst ferner Mittel zur Durchführung einer Bildbearbeitung anhand der Messbilder der einzelnen Empfänger der Empfängereinheit, was insbesondere eine Mittelwertbildung beinhaltet.

Die Datenverarbeitungseinheit 50 kann wiederum in Verbindung mit einer Steuereinheit 60 für den Produktionsprozess stehen, innerhalb dessen das Flachglas-Substrat produziert wird. Bei Abweichungen des Transmissionsgrads des Substrats von einem Sollwert kann dies von der Datenverarbeitungseinheit 50 an die Steuereinheit 60 gemeldet werden, welche daraufhin das Substrat als untauglich registrieren und/oder Parameter des Produktionsprozesses ändern kann, um den Transmissionsgrad wieder in den gewünschten Bereich zu bringen.

Dabei übersteigt die Breite b der Lichtquelle 20 vorzugsweise die Breite B des Flachglas-Substrats 40. Das Gleiche gilt für die Breite der Empfängereinheit 30 bzw. den maximalen Bereich, der durch die Kameras der Empfängereinheit 30 abgebildet werden kann. In diesem Fall liegt, wie in Fig. 2 erkennbar, neben der Glasbahn 40 links und rechts jeweils ein äußerer Bereich 32 vor, innerhalb dessen Licht der Lichtquelle 20 ohne Durchtritt durch das Substrat 40 auf eine äußere Kamera 31n der Empfängereinheit 30 treffen kann. Diese Bereiche ohne Lichtdurchtritt durch das Flachglas-Substrat können als Nullmessung für eine Kalibrierung der Messvorrichtung 10 genutzt werden.

Der geeignete Abstand zwischen dem LED-Panel 20 und dem plattenförmigen Diffusor 22 hängt stark vom gewählten Diffusortyp und seinen Eigenschaften ab. Er kann beispielsweise in der Größenordnung von 5 bis 20 cm, insbesondere bei etwa 10 cm liegen. Als Abstand zwischen dem Diffusor und dem Flachglas-Substrat haben sich 15 bis 45 cm, insbesondere etwa 30 cm als vorteilhaft erwiesen, während der Abstand zwischen der Empfängereinheit und dem Flachglas-Substrat als Gegenstandsweite in der Größenordnung von 70 bis 150 cm, insbesondere bei etwa 110cm liegen kann. Dieser Abstand ist stark vom Kamerasensor und Objektiv der Kamera abhängig. Die Abstände zwischen dem Flachglas-Substrat und den Komponenten der Messvorrichtung sind ferner relevant aufgrund der Tatsache, dass eine Messung vorzugsweise am noch warmen Substrat vorgesehen ist, insbesondere sogar im laufenden Produktionsprozess. Somit ist die Messvorrichtung einem Glasband gegenüber liegend angeordnet, das mindestens 40 bis 45°C heiß ist. Seine Temperatur kann jedoch auch deutlich über 100°C liegen. Die Hardware muss an diese Gegebenheiten angepasst sein.

Neben der geschilderten Hardware umfasst die Erfindung auch die zugehörige Software. Diese setzt sich hauptsächlich zusammen aus Software für die Steuerung der Lichtquellen und -empfänger, Software zum Auswerten der ermittelten Daten und einem angepassten Kalibrieralgorithmus. Die Datenverarbeitungseinheit 50 verarbeitet die Messdaten und kann die entsprechenden Informationen beispielsweise an die Steuerung 60 der Produktionsanlage bzw. die Qualitätssicherung weitergeben. Dabei ist das Echtzeitverhalten des Systems von besonderer Bedeutung und die beim Einsatz von Kameras anfallenden hohen Datenraten müssen optimiert werden. Die sehr umfangreiche Datenmenge, die von den Kameras erfasst wird, kann beispielsweise durch Vorauswertung reduziert werden. Dies ermöglicht es insbesondere, die zur Verfügung stehenden Messdaten über Standardschnittstellen (LAN, WLAN, CAN-Bus etc.) zu weiterverarbeitenden Systemen übertragen zu können, ohne dass Bandbreiten-Probleme auftreten.

Das grundsätzliche Messverfahren, das für die Bestimmung bzw. Prüfung des Transmissionsgrads des Flachglas-Substrats 40 verwendet wird, beruht auf der bekannten Wellenlänge des Lichts der Lichtquelle 20 und dem bekannten Spektrum des Flachglas-Substrats. Die Glasbahn 40 stellt ein Hindernis für die Ausbreitung des Lichts der Lichtquelle 20 dar. Der Transmissionsgrad *τ* beschreibt den Anteil des durchgelassenen Lichtstroms zum auftreffenden Lichtstrom, der von einer Kamera der Empfängereinheit 30 erfasst wird. Wenn *I₀* die Intensität des auftreffenden Lichts ist und ***I**ₚ* die Intensität des Lichts hinter der Glasbahn, dann ist τ = Iₚ/I₀.

Die Verluste entstehen durch Reflexion an der Oberfläche und Absorption beim Durchlaufen der Glasbahn. Dabei hängen die Absorption und damit auch die Transmission wesentlich von der Zusammensetzung des Glases und dessen Dicke ab. In der Regel sind die Lichtquellen, die im Alltag eine Rolle spielen (Sonne), nicht monochromatisch, sondern enthalten Licht verschiedener Wellenlängen. Der Transmissionsgrad ist dabei wellenlängenabhängig.

Um den Transmissionsgrad in einem kontinuierlichen Spektrum zu bestimmen, wird üblicherweise eine Lichtquelle mit dem entsprechenden Spektrum benötigt. Mit Hilfe eines Monochromators kann man das Spektrum durchstimmen und die Transmission für jede Wellenlänge bestimmen. Nachteilig ist hierbei jedoch die begrenzte zeitliche Auflösung. Ferner dauert ein solcher Vorgang zu lange, um ihn in eine Inline-Prüfung an einem kontinuierlich durchlaufenden Glasband zu integrieren. Es kann daher vorteilhaft sein, den relevanten Teil des Spektrums hinsichtlich der Anwendungsbestimmung des Glases einzuschränken. Für ein robustes Verfahren zum Einsatz in der Produktion hat es sich beispielsweise als vorteilhaft erwiesen, sich auf ein zu vermessendes diskretes Spektrum zu beschränken, das man durch monochromatische Lichtquellen innerhalb der Leuchtwand 20 realisieren kann. Für eine Qualitätskontrolle kann dies ausreichend sein. Die Beschränkung auf ausgewählte Wellenlängen hat ebenfalls den Vorteil, dass Störeinflüsse, vor allem durch Fremdlicht, leichter eliminiert werden können.

Dabei ist es erforderlich, unter Berücksichtigung des Sonnenspektrums und der spektralen Charakteristiken der verschiedenen Solarzelltypen entsprechende repräsentative Wellenlängen zu definieren und mit den LEDs der Lichtquelle 20 zu realisieren. Die Empfangseinheit 30 wird dann auf diese Wellenlängen abgestimmt. Die Bildwiederholrate wird dabei für eine quasi-kontinuierliche Messung in Abhängigkeit von der Fließgeschwindigkeit der Glasbahn ermittelt.

Ergänzend oder alternativ ist es auch möglich, mit Weißlichtdioden der Lichtquelle 20 eine Weißlichtmessung durchzuführen. So können für alle enthaltenen Wellenlängen Verunreinigungen aufgefunden werden, welche durch eine selektive Absorption eine Reduzierung des Transmissionsgrads verursachen könnten.

Mit dem erfindungsgemäßen Verfahren kann der Transmissionsgrad eines Flachglas-Substrats 40 vorzugsweise ortsaufgelöst über seine gesamte Fläche bestimmt werden. Für die reine Qualitätssicherung reicht es dabei unter Umständen aus, eine Absolutmessung des Transmissionsgrads durch eine Vergleichsmessung (Abweichung vom Soll) zu ersetzen. In diesem Fall ist es ausreichend, die Referenzwerte durch Material mit den gewünschten Eigenschaften zu erzeugen.

Neben einer homogenen flächigen Ausleuchtung der Glasbahn durch die flächenhafte Lichtquelle 20 besteht ferner die Möglichkeit, durch Einzelansteuerung der LEDs Prüfmuster zu erzeugen. So kann die Vorrichtung auch hinsichtlich einer Defekterkennung erweitert werden. Zusammen mit der gezielten Triggerung von Kameraaufnahmen lassen sich dann unterschiedliche Messungen quasi-simultan durchführen. Über Hardware-Trigger können kurze Lichtblitze mit den unterschiedlichsten Eigenschaften erzeugt werden. Als Beispiel seien hier erwähnt: Eine homogene Ausleuchtung, Muster, die einzelne LEDs betonen oder Grauverläufe, die durch die unterschiedliche Blitzlänge der einzelnen LEDs entstehen.

Für eine genaue und reproduzierbare Messung ist ein kalibriertes Messsystem eine wesentliche Voraussetzung. Vorzugsweise wird daher ein Kalibrierverfahren verwendet, welches in das Inline-Messverfahren integriert werden kann, da es sich in der Flachglasproduktion um einen unterbrechungsfreien kontinuierlichen Prozess handelt. Der Prozess kann somit nicht für eine Kalibrierung der Messvorrichtung unterbrochen werden. Mit einer Intensitätsregelung der LED-Strahler durch PWM statt herkömmlicher Stromregelung steht dabei ein Mittel zur Verfügung, die Helligkeit der Lichtquelle 20 bei Bedarf beliebig einstellen und nachregeln zu können. Darüber hinaus können mit PWM alterungsbedingte Reduzierungen der Licht-Intensität LEDindividuell im Online-Kalibrierverfahren kompensiert und damit ein hohes Maß an Langzeitstabilität der Lichtquelle gewährleistet werden.

Bei einer typischen Bahnbreite B von 3,5 bis 4 Metern und Messequipment sowohl auf Ober- und Unterseite ist es nur schwer möglich, die Messgeräte in einem Offline-Prozess zu kalibrieren, weil dies mit einem erheblichen Umbau-Aufwand verbunden ist. Für einen automatisierten Kalibrierprozess wären hingegen bewegliche Teile notwendig, welche ebenfalls nachteilig wären.

Die Erfindung verfolgt daher in einer Ausführungsform einen Ansatz für eine Kalibrierung, der ohne bewegliche Teile auskommt. Dabei werden alle eingesetzten Lichtquellen und Kameras durch überlappende Aufnahmebereiche in einem Step-by-Step-Abgleich mit dem Nachbarsystem kalibriert, wobei die jeweils äußeren Kameras aufgrund von Nullmessungen neben der Glasbahn Referenzwerte mit definierten Kalibrierwerten zu Verfügung haben. So kann sowohl ein Abgleich mit einem Referenzsystem erfolgen als auch die Güte der Kalibrierung beurteilt werden. Mit den beidseitigen Referenzsystemen kann eine Fehlkalibrierung, die durch momentane Änderungen in den Glaseigenschaften entstehen könnte, ausgeschlossen werden.

### Bezugszeichenliste:

- 10: Messvorrichtung
- 11: Richtung des Relativbewegung, Bewegungsrichtung Glasbahn
- 20: Lichtquelle, Leuchtwand, LED-Panel
- 21: Lichtquelle, Leuchtdiode, LED
- 22: Diffusor
- 30: Empfängereinheit
- 31,31n: Empfänger, Kamera
- 32: Äußerer Messbereich
- 33,33': Messbild
- 40: Flachglas-Substrat, Glasbahn
- 50: Datenverarbeitungseinheit
- 51: Bildverarbeitungseinheit
- 60: Steuerungseinheit einer Produktionsanlage

## Patentansprüche

1. Verfahren zur Ermittlung des Transmissionsgrads eines Flachglas-Substrats (40) mit einer Messvorrichtung (10), mit der Licht wenigstens einer Lichtquelle (20) von einer Seite des Flachglas-Substrats (40) durch das Flachglas-Substrat (40) hindurch auf die gegenüber liegende Seite des Flachglas-Substrats (40) geleitet wird, wo es durch wenigstens eine Empfängereinheit (30) erfasst wird und anhand eines Vergleichs zwischen der Intensität des von der Lichtquelle (20) ausgesandten Lichts und des auf die Empfängereinheit (30) fallenden Lichts der Transmissionsgrad des Flachglas-Substrats (40) ermittelt wird, **dadurch gekennzeichnet, dass** die Lichtquelle eine flächenhafte diffuse Lichtquelle (20) ist und die Empfängereinheit (30) wenigstens einen ortsauflösenden Empfänger (31;31n) umfasst, zwischen denen das Flachglas-Substrat (40) positioniert wird, und durch eine Auswertung von Helligkeitswerten im Messbild (33;33') des ortsauflösenden Empfängers (31;31n) der Transmissionsgrad ortsaufgelöst in einer Teilfläche des Flachglas-Substrats (40) ermittelt wird, welche vom Messbild (33;33') abgedeckt wird.

2. Verfahren nach Anspruch 1,
**dadurch gekennzeichnet, dass** das Flachglas-Substrat (40) und die Messvorrichtung (10) kontinuierlich so in Relation zueinander bewegt werden, dass die Empfängereinheit (30) im Laufe dieser Bewegung den Lichtdurchtritt durch unterschiedliche Teilbereiche des Flachglas-Substrats (40) erfasst, wobei vorzugsweise die Messvorrichtung (10) ortsfest ist, während das Flachglas-Substrat (40) kontinuierlich zwischen der Lichtquelle (20) und der Empfängereinheit (30) hindurch bewegt wird.

3. Verfahren nach Anspruch 1 oder 2,
**dadurch gekennzeichnet, dass** im Messbild (33;33') des ortsauflösenden Empfängers (31;31n) eine Bildbearbeitung durchgeführt wird, welche eine Mittelwertbildung für Helligkeitswerte über mehrere Punkte wenigstens eines Ausschnitts des Messbilds (33;33') beinhaltet, und die Ermittlung des Transmissionsgrads nach der Bildbearbeitung des Messbilds (33;33') erfolgt, wobei vorzugsweise der für die Mittelwertbildung verwendete Ausschnitt des Messbilds (33:33') größer ist als Abmessungen von Strukturen in der Oberfläche des Flachglas-Substrats (40).

4. Verfahren nach einem der vorhergehenden Ansprüche 1 bis 3,
**dadurch gekennzeichnet, dass** eine Überprüfung des Transmissionsgrads durch einen Vergleich eines durch die Messvorrichtung (10) ermittelten Transmissionsgrads mit einem Soll-Transmissionsgrad erfolgt.

5. Verfahren nach einem der vorhergehenden Ansprüche 2 bis 4,
**dadurch gekennzeichnet, dass** das Flachglas-Substrat (40) quer zur Richtung (11) der Relativbewegung zwischen der Messvorrichtung (10) und dem Flachglas-Substrat (40) eine Ausdehnung der Breite B hat, wobei die Lichtquelle (20) das Flachgas-Substrat (40) über die gesamte Breite B durchstrahlt und die Empfängereinheit (30) Licht erfasst, welches durch einen Streifen durch das Flachglas-Substrat (40) hindurchtritt, der sich über die gesamte Breite B des Flachglas-Substrats (40) erstreckt.

6. Verfahren nach einem der vorhergehenden Ansprüche 1 bis 5,
**dadurch gekennzeichnet, dass** die Empfängereinheit (30) mehrere Empfänger (31;31n) aufweist, die zur Erfassung von Licht der Lichtquelle (20) ausgebildet sind und deren Messbilder (33;33') durch eine Bildverarbeitungseinheit (51) zu einem Abbild eines flächigen Bereiches des Flachglas-Substrats (40) zusammen gefügt werden, wobei vorzugsweise die Empfänger (31;31n) nebeneinander angeordnet sind und ihre Messbilder (33;33') zu einem Abbild eines Streifens des Flachglas-Substrats (40) zusammen gefügt werden, der sich über die gesamte Breite B erstreckt.

7. Verfahren nach Anspruch 6,
**dadurch gekennzeichnet, dass** sich die Messbilder (33;33') der Empfänger (31;31n) bereichsweise überlappen.

8. Verfahren nach einem der vorhergehenden Ansprüche 1 bis 7,
**dadurch gekennzeichnet, dass** Licht der Lichtquelle (20) in wenigstens einem Bereich neben dem Flachglas-Substrat (40) ohne Durchtritt durch das Flachglas-Substrat (40) von der Empfängereinheit (30) erfasst wird.

9. Verfahren nach Anspruch 8,
**dadurch gekennzeichnet, dass** das von der Empfängereinheit (30) ohne Durchtritt durch das Flachglas-Substrat (40) erfasste Licht der Lichtquelle (20) zur Definition eines Referenzwerts für die Kalibrierung der Messvorrichtung (10) verwendet wird.

10. Verfahren nach den Ansprüchen 7 und 9,
**dadurch gekennzeichnet, dass** ein Messbild wenigstens eines äußeren Empfängers (31;31n), welches einen Randbereich des Flachglas-Substrats (40) wiedergibt, auch einen Bereich neben dem Flachglas-Substrat (40) umfasst, über den dieser äußere Empfänger (31;31n) einen Referenzwert mit einem definierten Kalibrierwert erhält und das Messsystem weiterer Empfänger in einem Step-by-Step-Abgleich mit dem jeweils benachbarten Messsystem kalibriert wird, wobei vorzugsweise die Kalibrierung der Messvorrichtung (10) kontinuierlich während der Überprüfung des Transmissionsgrads erfolgt.

11. Vorrichtung zur Ermittlung des Transmissionsgrads eines Flachglas-Substrats (40), umfassend eine Messvorrichtung (10), mit der Licht wenigstens einer Lichtquelle (20) von einer Seite des Flachglas-Substrats (40) durch das Flachglas-Substrat (40) hindurch auf die gegenüber liegende Seite des Flachglas-Substrats (40) geleitet werden kann, wo es durch wenigstens eine Empfängereinheit (30) erfasst wird, und die Vorrichtung eine Datenverarbeitungseinheit (50) in Verbindung mit der Lichtquelle (20) und der Empfängereinheit (30) aufweist, welche dazu ausgebildet ist, anhand eines Vergleichs zwischen der Intensität des von der Lichtquelle (20) ausgesandten Lichts und des auf die Empfängereinheit (30) fallenden Lichts den Transmissionsgrad des Flachglas-Substrats (40) zu ermitteln, **dadurch gekennzeichnet, dass** die Lichtquelle eine flächenhafte diffuse Lichtquelle (20) ist und die Empfängereinheit (30) wenigstens einen ortsauflösenden Empfänger (31;31n) umfasst, zwischen denen das Flachglas-Substrat (40) positionierbar ist, und die Datenverarbeitungseinheit (50) ferner dazu ausgebildet ist, durch eine Auswertung von Helligkeitswerten im Messbild (33;33') des ortsauflösenden Empfängers (31;31n) den Transmissionsgrad ortsaufgelöst in einer Teilfläche des Flachglas-Substrats (40) zu ermitteln, welche vom Messbild (33;33') abgedeckt wird.

12. Vorrichtung nach Anspruch 11,
**dadurch gekennzeichnet, dass** die Vorrichtung Mittel zur kontinuierlichen Bewegung des Flachglas-Substrats (40) und der Messvorrichtung (10) in Relation zueinander aufweist, wobei mit der Empfängereinheit (30) im Laufe dieser Bewegung der Lichtdurchtritt durch unterschiedliche Teilbereiche des Flachglas-Substrats (40) erfassbar ist.

13. Vorrichtung nach Anspruch 12,
**dadurch gekennzeichnet, dass** die Messvorrichtung (10) ortsfest ist, während das Flachglas-Substrat (40) kontinuierlich zwischen der Lichtquelle (20) und der Empfängereinheit (30) hindurch bewegt wird.

14. Vorrichtung nach einem der vorhergehenden Ansprüche 11 bis 13,
**dadurch gekennzeichnet, dass** das Flachglas-Substrat (40) quer zur Richtung (11) der Relativbewegung zwischen der Messvorrichtung (10) und dem Flachglas-Substrat (40) eine Ausdehnung der Breite B hat, die geringer ist als die Breite b der Lichtquelle (20) in derselben Richtung.

15. Vorrichtung nach einem der vorhergehenden Ansprüche 11 bis 14,
**dadurch gekennzeichnet, dass** die Empfängereinheit (30) mehrere nebeneinander angeordnete Empfänger (31;31n) aufweist.

## Claims

1. A method for determining the transmittance of a flat-glass substrate (40) with a measuring device (10), with which light of at least one light source (20) is guided from one side of the flat-glass substrate (40) through the flat-glass substrate (40) to the opposite side of the flat-glass substrate (40), where it is captured by at least one receiving unit (30) and the transmittance of the flat-glass substrate (40) is determined by means of a comparison between the intensity of the light emitted by the light source (20) and the light incident upon the receiving unit (30), **characterized in that** the light source is a surface-like diffuse light source (20), and the receiving unit (30) comprises at least one spatially resolving receiver (31; 31n), between which the flat-glass substrate (40) is positioned, and the transmittance is determined in a spatially resolved manner in a partial surface of the flat-glass substrate (40), which is covered by the measuring image (33; 33'), by an evaluation of brightness values in the measuring image (33; 33') of the spatially resolving receiver (31; 31n).

2. The method according to claim 1,
**characterized in that** the flat-glass substrate (40) and the measuring device (10) are continuously moved relative to one another in such a manner that over the course of this movement, the receiving unit (30) captures the light passage through different partial areas of the flat-glass substrate (40), wherein, preferably, the measuring device (10) is stationary, whereas the flat-glass substrate (40) is continuously moved through between the light source (20) and the receiving unit (30).

3. The method according to claim 1 or 2,
**characterized in that** in the measuring image (33; 33') of the spatially resolving receiver (31; 31n), an image editing is carried out with includes an averaging process for brightness values over several points of at least a portion of the measuring image (33; 33'), and the transmittance is determined after the image editing of the measuring image (33; 33'), wherein, preferably, the portion of the measuring image (33; 33') used for the averaging process is larger than dimensions of structures in the surface of the flat-glass substrate (40).

4. The method according to any one of the preceding claims 1 to 3,
**characterized in that** a verification of the transmittance is carried out by means of a comparison of a transmittance determined by the measuring device (10) with a target transmittance.

5. The method according to any one of the preceding claims 2 to 4,
**characterized in that** the flat-glass substrate (40) has an extent with the width B transverse to the direction (11) of the relative movement between the measuring device (10) and the flat-glass substrate (40), with the light source (20) transmitting light through the flat-glass substrate (40) over the entire width B and the receiving unit (30) capturing light passing through a strip through the flat-glass substrate (40) extending over the entire width B of the flat-glass substrate (40).

6. The method according to any one of the preceding claims 1 to 5,
**characterized in that** the receiving unit (30) has several receivers (31; 31n), which are configured for capturing light of the light source (20) and whose measuring images (33; 33') are combined into an image of a planar area of the flat-glass substrate (40) by an image processing unit (51), wherein, preferably the receivers (31; 31n) are disposed next to one another, and their measuring images (33; 33') are combined into an image of a strip of the flat-glass substrate (40) extending over the entire width B.

7. The method according to claim 6,
**characterized in that** the measuring images (33; 33') of the receivers (31; 31n) overlap in some areas.

8. The method according to any one of the preceding claims 1 to 7, **characterized in that** light of the light source (20) is captured by the receiving unit (30) in at least one area next to the flat-glass substrate (40) without passing through the flat-glass substrate (40).

9. The method according to claim 8,
**characterized in that** the light of the light source (20) captured by the receiving unit (30) without passing through the flat-glass substrate (40) is used for defining a reference value for the calibration of the measuring device (10).

10. The method according to the claims 7 and 9,
**characterized in that** a measuring image of at least one outer receiver (31; 31n), which reproduces a border area of the flat-glass substrate (40), also includes an area next to the flat-glass substrate (40) via which this outer receiver (31; 31n) obtains a reference value with a defined calibration value and the measuring system of further receivers is calibrated in a step-by-step alignment with the respectively adjacent measuring system, wherein, preferably, the calibration of the measuring device (10) takes place continuously during the verification of the transmittance.

11. A device for determining the transmittance of a flat-glass substrate (40), comprising a measuring device (10), with which light of at least one light source (20) can be guided from one side of the flat-glass substrate (40) through the flat-glass substrate (40) to the opposite side of the flat-glass substrate (40), where it is captured by at least one receiving unit (30), and the device has a data processing unit (50) in connection with the light source (20) and the receiving unit (30), which is configured to determine the transmittance of the flat-glass substrate (40) by means of a comparison between the intensity of the light emitted by the light source (20) and the light incident upon the receiving unit (30), **characterized in that** the light source is a surface-like diffuse light source (20), and the receiving unit (30) comprises at least one spatially resolving receiver (31; 31n), between which the flat-glass substrate (40) can be positioned, and the data processing unit (50) is further configured for determining the transmittance in a spatially resolved manner in a partial surface of the flat-glass substrate (40), which is covered by the measuring image (33; 33'), by an evaluation of brightness values in the measuring image (33; 33') of the spatially resolving receiver (31; 31n).

12. The device according to claim 11,
**characterized in that** the device has means for continuously moving the flat-glass substrate (40) and the measuring device (10) relative to one another, wherein the light passage through different partial areas of the flat-glass substrate (40) can be captured with the receiving unit (30) over the course of this movement.

13. The device according to claim 12,
**characterized in that** the measuring device (10) is stationary, whereas the flat-glass substrate (40) is continuously moved through between the light source (20) and the receiving unit (30).

14. The device according to any one of the preceding claims 11 to 13,
**characterized in that** the flat-glass substrate (40), transverse to the direction (11) of the relative movement between the measuring device (10) and the flat-glass substrate (40), has an extent with the width B that is less than the width b of the light source (20) in the same direction.

15. The device according to any one of the preceding claims 11 to 14,
**characterized in that** the receiving unit (30) has several spatially resolving receivers (31; 31n) disposed side-by-side.

## Revendications

1. Procédé de détermination de la transmittance d'un substrat en verre plat (40), comprenant un dispositif de mesure (10) au moyen duquel de la lumière provenant d'au moins une source de lumière (20) est dirigée à travers le substrat en verre plat (40), d'un côté du substrat en verre plat (40) vers le côté opposé du substrat en verre plat (40) où elle est détectée par au moins une unité de réception (30), et la transmittance du substrat en verre plat (40) est déterminée à partir d'une comparaison entre l'intensité de la lumière émise par la source de lumière (20) et celle de la lumière rencontrant l'unité de réception (30), **caractérisé par le fait que** la source de lumière est une source de lumière diffuse (20) plane et l'unité de réception (30) comprend au moins un récepteur à résolution spatiale (31; 31n) entre lesquels le substrat en verre plat (40) est positionné, et qu'une évaluation de valeurs de luminosité dans l'image de mesure (33; 33') du récepteur à résolution spatiale (31; 31n) permet de déterminer avec une résolution spatiale la transmittance dans une surface partielle du substrat en verre plat (40) qui est recouverte par l'image de mesure (33;33').

2. Procédé selon la revendication 1, **caractérisé par le fait que** le substrat en verre plat (40) et le dispositif de mesure (10) sont déplacés en continu l'un par rapport à l'autre de telle sorte que l'unité de réception (30) détecte, pendant ce mouvement, le passage de lumière à travers différentes zones partielles du substrat en verre plat (40), dans lequel, de préférence, le dispositif de mesure (10) est stationnaire, tandis que le substrat en verre plat (40) est déplacé en continu de manière à passer entre la source de lumière (20) et l'unité de réception (30).

3. Procédé selon la revendication 1 ou 2, **caractérisé par le fait que** dans l'image de mesure (33; 33') du récepteur à résolution spatiale (31; 31n) est réalisé un traitement d'image qui comprend une formation de moyennes pour des valeurs de luminosité sur plusieurs points d'au moins un fragment de l'image de mesure (33; 33'), et que la détermination de la transmittance se fait après le traitement d'image de l'image de mesure (33; 33'), dans lequel, de préférence, le fragment de l'image de mesure (33; 33') qui est utilisé pour la formation de moyennes est plus grand que des dimensions de structures dans la surface du substrat en verre plat (40).

4. Procédé selon l'une quelconque des revendications précédentes 1 à 3, **caractérisé par le fait qu'**une vérification de la transmittance est réalisée en comparant une transmittance déterminée par le dispositif de mesure (10) à une transmittance de consigne.

5. Procédé selon l'une quelconque des revendications précédentes 2 à 4, **caractérisé par le fait que** le substrat en verre plat (40) présente une extension de largeur B transversalement à la direction (11) du mouvement relatif entre le dispositif de mesure (10) et le substrat en verre plat (40), dans lequel la source de lumière (20) émet les rayons à travers le substrat en verre plat (40) sur toute la largeur B et ladite unité de réception (30) détecte de la lumière qui passe à travers le substrat en verre plat (40) par une bande qui s'étend sur toute la largeur B du substrat en verre plat (40).

6. Procédé selon l'une quelconque des revendications précédentes 1 à 5, **caractérisé par le fait que** l'unité de réception (30) comprend une pluralité de récepteurs (31; 31n) qui sont conçus pour détecter de la lumière de la source de lumière (20) et dont les images de mesure (33; 33') sont assemblées par une unité de traitement d'image (51) pour former une image d'une zone plane du substrat en verre plat (40), dans lequel, de préférence, les récepteurs (31; 31n) sont agencés les uns à côté des autres et leurs images de mesure (33; 33') sont assemblées pour former une image d'une bande du substrat en verre plat (40), qui s'étend sur toute la largeur B.

7. Procédé selon la revendication 6, **caractérisé par le fait que** les images de mesure (33; 33') des récepteurs (31; 31n) se chevauchent par zones.

8. Procédé selon l'une quelconque des revendications précédentes 1 à 7, **caractérisé par le fait que** de la lumière de la source de lumière (20) est détectée par l'unité de réception (30) dans au moins une zone située à côté du substrat en verre plat (40), sans passer à travers le substrat en verre plat (40).

9. Procédé selon la revendication 8, **caractérisé par le fait que** la lumière de la source de lumière (20) détectée par l'unité de réception (30) sans qu'elle passe à travers le substrat en verre plat (40) est utilisée pour définir une valeur de référence pour le calibrage du dispositif de mesure (10).

10. Procédé selon les revendications 7 et 9, **caractérisé par le fait qu'**une image de mesure d'au moins un récepteur (31; 31n) extérieur, qui reproduit une zone marginale du substrat en verre plat (40), comprend également une zone à côté du substrat en verre plat (40) sur laquelle ce récepteur (31; 31n) extérieur reçoit une valeur de référence avec une valeur de calibrage définie, et le système de mesure d'autres récepteurs est calibré dans un équilibrage pas à pas avec le système de mesure respectivement voisin, dans lequel, de préférence, le calibrage du dispositif de mesure (10) étant réalisé en continu durant la vérification de la transmittance.

11. Dispositif de détermination de la transmittance d'un substrat en verre plat (40), comprenant un dispositif de mesure (10) au moyen duquel de la lumière provenant d'au moins une source de lumière (20) peut être dirigée à travers le substrat en verre plat (40), d'un côté du substrat en verre plat (40) vers le côté opposé du substrat en verre plat (40) où elle est détectée par au moins une unité de réception (30), et ledit dispositif comprend une unité de traitement de données (50) en liaison avec la source de lumière (20) et l'unité de réception (30), qui est conçue pour déterminer la transmittance du substrat en verre plat (40) à partir d'une comparaison entre l'intensité de la lumière émise par la source de lumière (20) et celle de la lumière rencontrant l'unité de réception (30), **caractérisé par le fait que** la source de lumière est une source de lumière diffuse (20) plane et l'unité de réception (30) comprend au moins un récepteur à résolution spatiale (31; 31n) entre lesquels le substrat en verre plat (40) peut être positionné, et ladite unité de traitement de données (50) est conçue en outre pour déterminer avec une résolution spatiale, par une évaluation de valeurs de luminosité dans l'image de mesure (33; 33') du récepteur à résolution spatiale (31; 31n), la transmittance dans une surface partielle du substrat en verre plat (40) qui est recouverte par l'image de mesure (33;33').

12. Dispositif selon la revendication 11, **caractérisé par le fait que** le dispositif comprend des moyens pour déplacer en continu le substrat en verre plat (40) et le dispositif de mesure (10) l'un par rapport à l'autre, dans lequel le passage de lumière à travers différentes zones partielles du substrat en verre plat (40) peut être détecté au moyen de l'unité de réception (30) pendant ce mouvement.

13. Dispositif selon la revendication 12, **caractérisé par le fait que** le dispositif de mesure (10) est stationnaire, tandis que le substrat en verre plat (40) est déplacé en continu de manière à passer entre la source de lumière (20) et l'unité de réception (30).

14. Dispositif selon l'une quelconque des revendications précédentes 11 à 13, **caractérisé par le fait que** le substrat en verre plat (40) présente une extension de largeur B transversalement à la direction (11) du mouvement relatif entre le dispositif de mesure (10) et le substrat en verre plat (40), largeur B qui est inférieure à la largeur b de la source de lumière (20) dans la même direction.

15. Dispositif selon l'une quelconque des revendications précédentes 11 à 14, **caractérisé par le fait que** ladite unité de réception (30) comprend une pluralité de récepteurs (31; 31n) agencés les uns à côté des autres.
